# EUROPEAN PATENT APPLICATION

(11) **EP 3 248 709 A1**
(43) Date of publication of application: **29.11.2017**
(21) Application number: 15878915.6
(22) Date of filing: 30.11.2015
(51) Int. Cl.: B21J 15/00, B21K 1/62, B23K 11/14, B23K 11/34, F16B 5/04, F16B 19/06

(54) **FORGED RIVET FOR JOINING DISSIMILAR MATERIALS, DISSIMILAR MATERIAL-JOINING METHOD, AND PRODUCT OF JOINED DISSIMILAR MATERIALS**

(30) Priority: 20.01.2015 JP 2015008435
(71) Applicant: Kabushiki Kaisha Kobe Seiko Sho (Kobe Steel, Ltd.), Kobe-shi, Hyogo 651-8585 (JP)
(72) Inventor: IWASE, Tetsu, Kanagawa 251-8551 (JP)
(74) Representative: Müller-Boré & Partner Patentanwälte PartG mbB
(86) International application number: PCT/JP2015/083542
(87) International publication number: WO 2016/117226

(57) **Abstract**

A forged rivet for joining dissimilar materials is obtained from a disc-shaped head and a shank. The shank is obtained from: a first shank portion extending from the head; a ring-shaped protruding portion that protrudes outward at the tip of the first shank portion; and a second shank portion, the cross-sectional area of which is smaller than the first shank portion and which extends further in the direction of the tip from the protruding portion. On the surfaces of the shank and the head (the surfaces that contact a light alloy material when the rivet is driven into the light alloy material), a coating film with a higher electrical resistance than steel is formed.

## Description

### Technical Field

The present invention relates to a forged rivet for joining dissimilar materials, a dissimilar-material joining method, and a dissimilar-material joined body obtained in accordance with the joining method.

### Background Art

In recent years, in order to confront global environmental issues caused by, for example, exhaust gas, fuel efficiency has been improved by reducing the weight of vehicle bodies of transporters, such as automobiles. Furthermore, in order to increase safety in the event of a collision of an automobile without inhibiting this weight reduction as much as possible, a light alloy material that is lighter in weight and has high energy absorbency, such as an aluminum alloy material or a magnesium material, is being increasingly used as part of a steel material conventionally used in the vehicle-body structure of the automobile.

An aluminum alloy material used in a vehicle body of, for example, an automobile is in the form of a rolled plate material, an extruded material, or a forged material. For example, as outer panels and inner panels of large panel structures, such as roofs, hoods, fenders, doors, and trunk lids of automobiles, the use of, for example, AA or JIS 6000-series (Al-Mg-Si) or 5000-series (Al-Mg) aluminum alloy plates is being considered.

These aluminum alloy materials need to be used in combination with commonly-used steel materials (i.e., steel members), such as steel plates or steel dies, unless the entire vehicle body is constituted of an aluminum alloy material. Inevitably, the aluminum alloy material and the steel material need to be joined to each other.

Patent Literatures 1 to 5 each disclose a technology for joining a light alloy material and a steel material by preliminarily joining a steel rivet to a light alloy material, such as an aluminum alloy material, subsequently clamping a head of the rivet and the steel material together by using a pair of electrodes, and spot-welding a shank of the rivet and the steel material by applying electricity thereto.

In Patent Literature 1, the steel rivet is driven into the light alloy material, the light alloy material is perforated by the shank while the rivet is simultaneously clinched to the light alloy material, and the shank of the rivet and the steel material are subsequently spot-welded together. The head of the rivet is provided with a recess (i.e., an annular groove).

Similarly, in Patent Literature 2, the steel rivet is driven into the light alloy material, the light alloy material is perforated by the shank while the rivet is simultaneously clinched to the light alloy material, and the shank of the rivet and the steel material are subsequently spot-welded together. The head of the rivet is provided with a recess (i.e., an annular groove). The shank has a cross-sectional area that increases toward the distal end thereof, and the distal-end surface of the shank of the rivet is provided with a protrusion (i.e., a bulging portion).

Patent Literature 3 describes that a recess is provided in the peripheral surface at the distal end of the shank of the steel rivet and that the light alloy material is provided with a recess that connects to the aforementioned recess when the rivet is driven into the light alloy material. Furthermore, Patent Literature 3 also describes that a coating film (i.e., an insulation layer) having an electrical resistance higher than that of the steel material is provided on a portion of the surface of the head and the shank of the rivet that comes into contact with the light alloy material after the rivet is driven into the light alloy material.

In Patent Literature 4, the steel rivet is pressed into a pilot hole formed in the light alloy material, the rivet is clinched to the light alloy material, and the shank of the rivet and the steel material are subsequently spot-welded together. The shank of the rivet includes a distal end portion having a diameter smaller than the diameter of the pilot hole, a base end portion that is larger than the diameter of the pilot hole, and a curved reduced-diameter portion (having a diameter smaller than that of the distal end portion) between the distal end portion and the base end portion.

In Patent Literature 5, the steel rivet is driven into the light alloy material, the light alloy material is perforated by the shank while the rivet is simultaneously clinched to the light alloy material, and the shank of the rivet and the steel material are subsequently spot-welded together. The rivet is provided with bulging portions at the head and the distal end of the shank. Furthermore, Patent Literature 5 also describes that the head is provided with a recess (i.e., an annular groove), and that a coating film (i.e., insulation layer) having an electrical resistance higher than that of the steel material is provided on a portion of the rivet that comes into contact with the light alloy material after the rivet is driven into the light alloy material.

### Citation List

### Patent Literature

PTL 1: Japanese Unexamined Patent Application Publication No. 2009-285678
PTL 2: Japanese Unexamined Patent Application Publication No. 2010-207898
PTL 3: Japanese Unexamined Patent Application Publication No. 2014-580
PTL 4: Japanese Unexamined Patent Application Publication No. 2014-121710
PTL 5: Japanese Unexamined Patent Application Publication No. 2014-173683

### Summary of Invention

### Technical Problem

In order to obtain predetermined weld strength in the methods described in Patent Literatures 1 to 5, it is necessary to form a weld nugget having a predetermined size by efficiently applying weld current to the steel material, which is a material to be joined, during the spot-welding process. In this case, it is necessary to prevent so-called shunting in which the electric current flows from the rivet toward the light alloy material instead of the steel material.

Thus, Patent Literatures 2 to 5 each disclose a rivet provided with a protruding portion or a bulging portion at the distal end of the shank so that the electric current flowing through the rivet concentrates at the center thereof. Patent Literatures 3 and 5 each disclose a rivet provided with an insulation layer on a portion that comes into contact with the light alloy material after the rivet is driven into the light alloy material.

However, in the case where the steel rivet is driven into the light alloy material and the light alloy material is perforated by the shank while the rivet is simultaneously clinched to the light alloy material, the shank of the rivet is driven into the light alloy material while shearing the light alloy material. Therefore, the insulation layer formed on the shank sometimes peels off in the axial direction, causing the basis material (i.e., the steel material) of the rivet to become exposed. In that case, the shunting of the weld current cannot be effectively prevented, causing the weld nugget to be smaller than the predetermined size.

As described in Patent Literatures 3 and 5, the steel rivet can be formed by machining, such as cutting or grinding, or by forging. However, as described in Patent Literature 5, in view of the productivity, strength, and dimensional accuracy of the rivet, it is preferable that the rivet be formed by forging and not by machining, such as cutting or grinding. Therefore, the rivet described in each of Patent Literatures 3 and 5 has a cross-sectional shape that does not have an undercut portion and that can be formed readily in accordance with normal forging alone.

Meanwhile, in the rivet described in each of Patent Literatures 1 and 2, the diameter at the distal end of the shank (i.e., a portion to serve as a shearing edge when the rivet is driven into the light alloy material) is larger than the diameter at the base end. In a case where this rivet is provided with the insulation layer described in each of Patent Literatures 3 and 5, the portion toward the rear (i.e., toward the base end) relative to the distal end of the shank is not directly involved with the shearing of the light alloy material when the rivet is driven thereto. As a result, it is considered that the insulation layer can be prevented from peeling off from this portion. However, a dissimilar-material joining rivet of this type normally has an extremely small size (see Examples to be described later) and thickness, and it is difficult to form a rivet having such a deep undercut portion by forging alone. Therefore, there is a problem in that the rivet has to be formed by machining alone, such as cutting or grinding, from a raw material to a product shape, or in that the rivet has to be made into a product by forging a raw material to a semi-finished product (i.e., a near net shape) and then adding the aforementioned machining process.

An object of the present invention is to prevent an insulation layer (i.e., a coating film having an electrical resistance higher than that of steel) formed on a rivet from peeling off when the rivet is driven into a light alloy material and thus prevent shunting of electric current from occurring during a spot-welding process, assuming that a dissimilar-material-joining steel rivet used is formed by forging from a raw material to a product shape and has the insulation layer on the surface thereof.

### Solution to Problem

The present invention provides a forged rivet for joining dissimilar materials and composed of steel. The forged rivet includes a plate-shaped head and a shank extending from the head. The forged rivet is driven into a light alloy material and perforates the light alloy material by using the shank while being simultaneously clinched to the light alloy material. The forged rivet is subsequently spot-welded to a steel material. The shank includes a first shank portion extending from the head, a ring-shaped protruding portion protruding along an outer periphery of a distal end of the first shank portion, and a second shank portion having a cross-sectional area smaller than that of the first shank portion and extending further toward a distal end from the protruding portion. Of the shank and the head, a surface in contact with the light alloy material is provided with a coating film having an electrical resistance higher than that of the steel material.

The forged rivet in the present invention refers to a rivet formed from a raw material to a final product shape (i.e., a net shape) by forging alone.

The light alloy material in the present invention includes titanium in addition to aluminum and magnesium. In the rivet, the head is preferably provided with an annular groove surrounding the first shank portion, and/or the distal end of the second shank portion is preferably provided with a protrusion.

The present invention also provides a dissimilar-material joining method for joining a steel material and a light alloy material by using the aforementioned forged rivet for joining dissimilar materials. The dissimilar-material joining method includes driving the forged rivet into the light alloy material and perforating the light alloy material by using the shank while simultaneously clinching the forged rivet to the light alloy material; subsequently placing the light alloy material over the steel material; clamping the head of the forged rivet and the steel material by using a pair of electrodes; applying electricity to the electrodes while pressing against the forged rivet and the steel material by using the electrodes; and spot-welding the shank of the forged rivet and the steel material together.

The present invention also provides a dissimilar-material joined body obtained by clinching the aforementioned forged rivet for joining dissimilar materials to the light alloy material, placing the light alloy material over the steel material, and joining the shank of the forged rivet to the steel material by spot-welding. The forged rivet is driven into the light alloy material, perforates the light alloy material by using the shank, and is clinched to the light alloy material between the head and the protruding portion. A gap is formed between the light alloy material and the second shank portion.

### Advantageous Effects of Invention

In the forged rivet for joining dissimilar materials according to the present invention, the shank includes a first shank portion extending from the head, a ring-shaped protruding portion protruding along an outer periphery of a distal end of the first shank portion, and a second shank portion having a cross-sectional area smaller than that of the first shank portion and extending further toward a distal end from the protruding portion. Based on this characteristic shape, the forged rivet for joining dissimilar materials according to the present invention can be formed to a product shape by normal forging alone, as will be described later, regardless of the fact that the rivet has an undercut portion.

When the forged rivet is driven into the light alloy material, the light alloy material is perforated by the shank. At the same time, the material surrounding the perforated hole plastically flows between the head and the protruding portion, so that the forged rivet becomes clinched to the light alloy material. The clinching can be performed readily because the plastically-flowing light alloy material flows into and fills the recess (i.e., the first shank portion) between the head and the protruding portion. Therefore, the clinching strength can be ensured even if the head is reduced in thickness, as compared with a case where there is no protruding portion. In the forged rivet having the head with the reduced thickness, the height of the head protruding from the light alloy material decreases, thus improving the external appearance of the dissimilar-material joined body.

When the forged rivet for joining dissimilar materials according to the present invention is driven into the light alloy material, the ring-shaped protruding portion provided at the distal end of the first shank portion serves a cutting edge so as to perforate the light alloy material. In this case, the contour of the first shank portion (i.e., the base side relative to the protruding portion) is located within the contour of the protruding portion as viewed in the axial direction, so that the first shank portion is not directly involved with shearing of the light alloy material. Thus, the insulation layer is prevented from peeling off from the surface of the first shank portion (i.e., the portion toward the base end relative to the protruding portion). As a result, the coating film having an electrical resistance higher than that of the steel material can be maintained on the surface in contact with the light alloy material, and shunting of electric current during spot-welding can be prevented, even after the forged rivet is clinched to the light alloy material. The above-described advantages of the present invention are exhibited not only in joining steel and aluminum, but also in joining steel and magnesium, as well as steel and titanium.

### Brief Description of Drawings

[Fig. 1] Fig. 1 is a perspective view illustrating an example of a rivet according to the present invention.
[Fig. 2] Fig. 2 is a cross-sectional view of the rivet shown in Fig. 1, taken along line I-I.
[Fig. 3A] Fig. 3A is a cross-sectional view for explaining a forging method for the rivet shown in Fig. 1.
[Fig. 3B] Fig. 3B is a cross-sectional view illustrating a rivet product.
[Fig. 4A] Fig. 4A schematically illustrates a driving step for the rivet according to the present invention.
[Fig. 4B] Fig. 4B schematically illustrates the driving step for the rivet according to the present invention.
[Fig. 5] Fig. 5 is a vertical sectional view illustrating a resistance-spot-welding step according to the present invention.
[Fig. 6A] Fig. 6A is a vertical sectional view illustrating a dissimilar-material joined body according to an embodiment of the present invention.
[Fig. 6B] Fig. 6B is a vertical sectional view illustrating a dissimilar-material joined body according to an embodiment of the present invention.
[Fig. 7A] Fig. 7A is a cross-sectional view illustrating another example of the rivet according to the present invention.
[Fig. 7B] Fig. 7B is a cross-sectional view illustrating another example of the rivet according to the present invention.
[Fig. 7C] Fig. 7C is a cross-sectional view illustrating another example of the rivet according to the present invention.
[Fig. 8A] Fig. 8A is a schematic cross-sectional view of a rivet according to the present invention manufactured in an example.
[Fig. 8B] Fig. 8B is a schematic cross-sectional view of a rivet according to the present invention manufactured in an example.
[Fig. 8C] Fig. 8C is a schematic cross-sectional view of a rivet according to a comparative example.
[Fig. 8D] Fig. 8D is a schematic cross-sectional view of a rivet according to a comparative example.

### Description of Embodiments

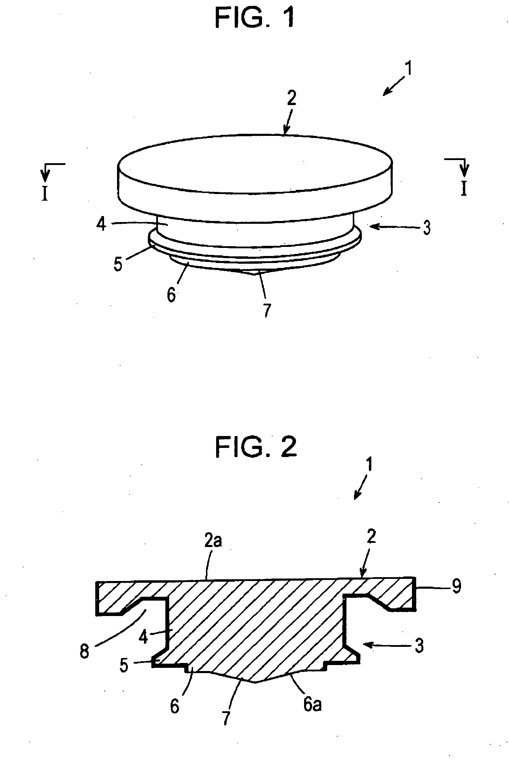

A forged rivet (simply referred to as "rivet" hereinafter) for joining dissimilar materials according to the present invention, a dissimilar-material joining method using the rivet, and a dissimilar-material joined body obtained in accordance with the joining method will be described in detail below with reference to Figs. 1 to 8. A rivet 1 shown in Figs. 1 and 2 includes a plate-shaped head 2 and a shank 3 extending from the head 2 and substantially has a three-dimensional shape of a rotating body (that is disc-shaped or donut-shaped in vertical section relative to the axis thereof). The shank 3 includes a first shank portion 4 extending directly from the head 2, a ring-shaped protruding portion 5 protruding along the outer periphery of the distal end of the first shank portion 4, and a second shank portion 6, the cross section of which is smaller than that of the first shank portion 4 and that extends further toward the distal end from the protruding portion 5. The distal end of the second shank portion 6 is provided with a low conical protrusion 7. An annular groove 8 surrounding the first shank portion 4 is provided at the first shank portion 4 side of the head 2.

Furthermore, the rivet 1 has an insulation layer (i.e., a coating film having an electrical resistance higher than that of steel) 9 over the entire surface excluding an end surface 2a of the head 2 and an end surface 6a of the second shank portion 6 (including an end surface of the protrusion 7). For example, the insulation layer 9 is formed of a coating having higher electrical resistivity (electrical resistance) than steel, such as DISGO (registered trademark), LAFRE (registered trademark), GEOMET (registered trademark), a polyester-based resin pre-coating, or silicone elastomer. The insulation layer 9 may be provided at least in an area where the rivet 1 and a light alloy material, which will be described later, come into contact with each other when the rivet 1 is driven into the light alloy material.

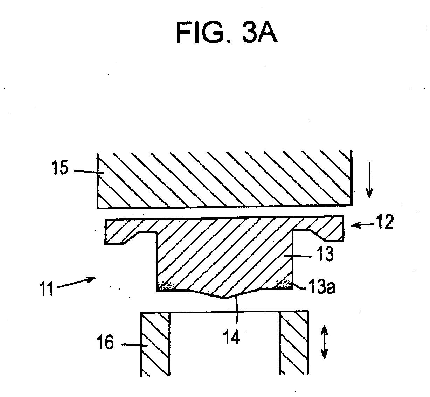

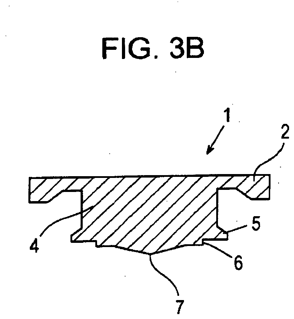

The main portion of the rivet 1 (i.e., a portion excluding the insulation layer 9) is formed by performing a forging process on a raw material. An example of the forging process will be described with reference to Figs. 3A, 3B, 3C, and 3D. First, an intermediate rivet product 11 shown in Fig. 3A is formed by performing a single-step or multi-step forging process on a raw material (i.e., a steel plate). The intermediate rivet product 11 is constituted of a head 12, a shank 13, and a protrusion 14 at the distal end of the shank 13. The head 12 and the protrusion 14 substantially have shapes identical to those of the head 2 and the protrusion 7, respectively, of the rivet 1. The shank 13 has a diameter substantially equal to that of the first shank portion 4 of the rivet 1 and is slightly longer. The shank 13 substantially has the same diameter along the entire length thereof, but has a slight draft angle.

Then, upper and lower dies 15 and 16 are used to perform a forging process (i.e., a type of heading process) for pressing against a distal-end outer peripheral portion 13a (i.e., an area marked with dots in Fig. 3A) of the shank 13 of the intermediate rivet product 11 in the axial direction. This forging process causes the material at the outer peripheral portion of the shank 13 to flow (expand) sideways so that the ring-shaped protruding portion 5 is formed and the second shank portion 6 is formed, whereby the rivet 1 is formed as a product, as shown in Fig. 3B. The contour of the first shank portion 4 is located within the contour of the protruding portion 5 as viewed in the axial direction, and the contour of the second shank portion 6 is located within the contour of the first shank portion as viewed in the axial direction. Because the forging process for the intermediate rivet product 11 can be performed based on open-die forging, the rivet 1 can be formed without using a complicated die structure (i.e., with the upper and lower dies 15 and 16 alone) even though the rivet 1 after the forging process has an undercut portion.

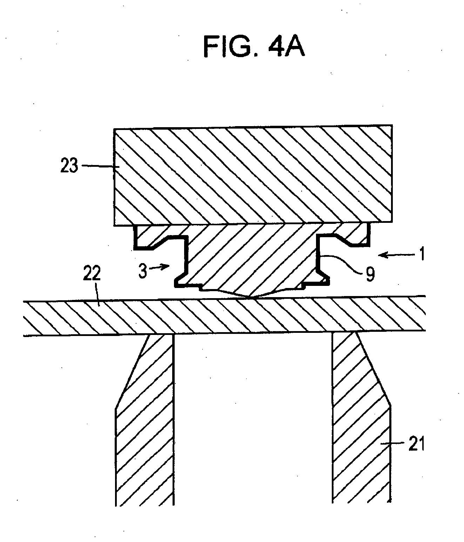

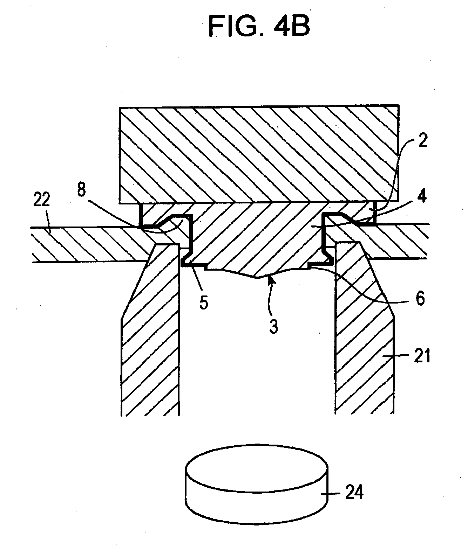

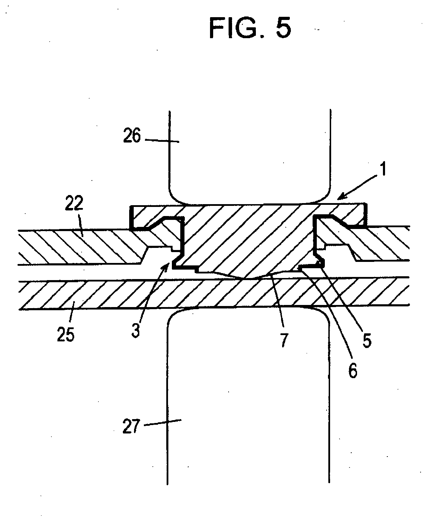

Next, the dissimilar-material joining method according to the present invention will be described with reference to Figs. 4A, 4B, 4C, 4D, and 5.

First, as shown in Fig. 4A, a light alloy material 22 is placed on a cylindrical lower die 21, the rivet 1 is disposed above the lower die 21, and the rivet 1 is driven into the light alloy material 22 by using an upper die (i.e., a punch) 23. Although the rivet 1 can be disposed on the light alloy material 22 in a state where the rivet 1 is supported by an appropriate support device, the rivet 1 may be magnetically attached to the punch 23 by magnetizing the punch 23 so as to be disposed on the light alloy material 22.

When the punch 23 is lowered toward the light alloy material 22 and the rivet 1 is driven into the light alloy material 22, the light alloy material is perforated by the shank 3, as shown in Fig. 4B. Then, a removed scrap 24 falls into the lower die 21, and the distal end portion (i.e., the second shank portion 6 and the protruding portion 5) of the shank 3 extends through the light alloy material 22. At the same time, the material surrounding the perforated hole formed in the light alloy material 22 plastically flows between the head 2 of the rivet 1 and the lower die 21, flows into the groove 8 provided in the head 2 of the rivet 1, and further flows between the head 2 and the protruding portion 5, thus adhering to the perimeter of the first shank portion 4. As a result of this driving process, the rivet 1 becomes clinched to the light alloy material 22.

The first shank portion 4 has a diameter smaller than that of the protruding portion 5, and the contour of the first shank portion 4 is located within the contour of the protruding portion 5 as viewed in the axial direction. Therefore, when the shank 3 is used to perforate the light alloy material, the insulation layer 9 provided on the surface of the first shank portion 4 is prevented from being scraped off at the inner periphery of the perforated hole in the light alloy material 22.

The light alloy material 22 having the rivet 1 clinched thereto is conveyed to a resistance-spot-welding device and is placed above a steel material 25, as shown in Fig. 5. In this case, the light alloy material 22 and the steel material 25 are disposed such that the rivet 1 is positioned between spot electrodes 26 and 27. Because the second shank portion 6 of the rivet 1 extends completely through the light alloy material 22, the protrusion 7 at the distal end of the second shank portion 6 and the steel material 25 come into contact with each other.

Subsequently, the upper and lower electrodes 26 and 27 are brought closer to each other so as to clamp the head 2 of the rivet 1 and the steel material 25 and apply pressure thereto. Then, pulsed current is applied between the electrodes 26 and 27 so as to resistance-spot-weld the rivet 1 and the steel material 25 together.

During the spot-welding process, the insulation layer 9 (see Fig. 2) exists, without peeling off, on the surface of the rivet 1 in contact with the light alloy material 22. Therefore, the applied current flows within the rivet 1 toward the steel material 25 without flowing (shunting) from the rivet 1 to the light alloy material 22. Moreover, because the protrusion 7 at the distal end of the second shank portion 6 and the steel material 25 are in contact with each other, the applied current flows through a region centered on the protrusion 7, and the second shank portion 6 of the rivet 1 and the steel material 25 fuse in the same region so as to become joined to each other.

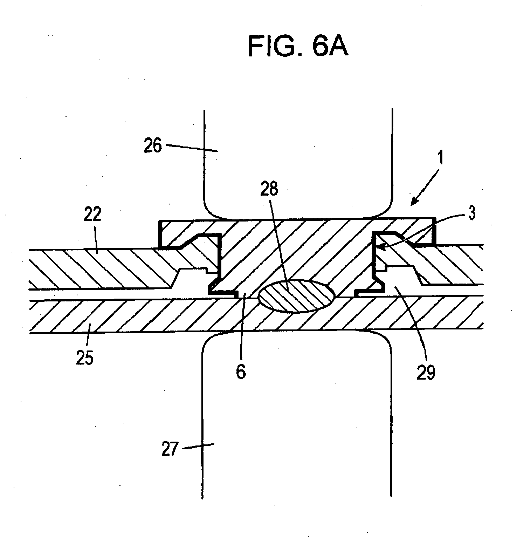

Fig. 6A illustrates the light alloy material 22 and the steel material 25 (i.e., a dissimilar-material joined body) after riveting and spot-welding, together with the upper and lower electrodes 26 and 27. Because the insulation layer 9 (see Fig. 2) exists on the surface of the rivet 1 in contact with the light alloy material 22, and the second shank portion 6 is provided with the protrusion 7, the weld current concentrates in the region centered on the protrusion 7. Thus, a weld nugget 28 of a predetermined size is readily formed at the center of the second shank portion 6.

Due to the protruding portion 5 existing between the second shank portion 6 and the light alloy material 22, a gap 29 is formed between the light alloy material 22 and the second shank portion 6. With this gap 29, the heat during the welding process is less likely to be transmitted from the second shank portion 6, where the weld nugget 28 is formed, to the light alloy material 22 in the vicinity of the shank 3, thereby preventing excessive softening or melting of the light alloy material 22 in the vicinity of the shank 3. As a result, a decrease in riveting strength is prevented.

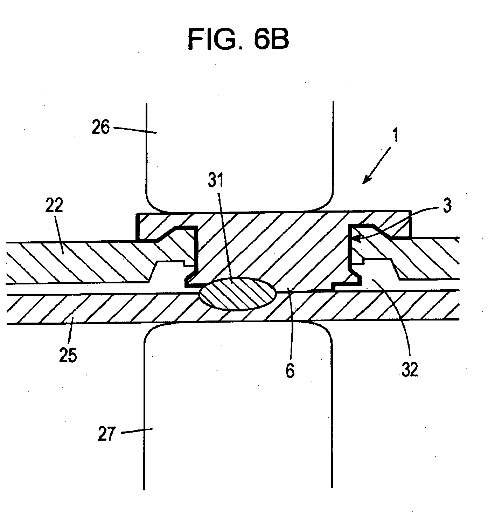

Although the axis of the rivet 1 is aligned with the axis of the electrodes 26 and 27 in Fig. 6A, the axis of the rivet 1 is deviated from the axis of the electrodes 26 and 27 in Fig. 6B. In the case of Fig. 6B, the positions where the electrodes 26 and 27 are in contact with the rivet 1 and the steel material 25 are in a peripheral portion deviated from the axis of the rivet 1, and the applied current flows through this peripheral portion of the rivet 1. Therefore, a weld nugget 31 is likely to form at a position deviated from the axis of the second shank portion 6 of the rivet 1 (i.e., a peripheral portion of the second shank portion 6). However, in this case, since a gap 32 is similarly formed between the light alloy material 22 and the second shank portion 6, excessive softening or melting of the light alloy material 22 in the vicinity of the shank 3 is prevented, whereby a decrease in riveting strength is prevented.

With regard to the spot-welding conditions, the conditions generally applied to joining together materials of the same type, such as joining steel to steel, may be directly applied. In other words, although the present invention relates to joining dissimilar materials, such as joining a light alloy material to steel, the conditions generally applied to joining together materials of the same type, such as joining steel to steel, may be applied. A preferred spot-welding condition is setting the pressure between a pair of electrodes within a range of 1.0 kN and 5.0 kN. Furthermore, it is preferable that the electric current between the electrodes range between 5 kA and 15kA, more preferably, between 7 kA and 8kA, and that the electric current be applied for a time period of 200xt (msec) or shorter due to the relationship with a thickness t (mm) of the light alloy material in the joined region. The reason for making this electric-current application time period proportional to the thickness t of the light alloy material is for forming a nugget with a specific size in the joined region in view of heat escaping through the light alloy material (having high thermal conductivity) clinched to the rivet 1.

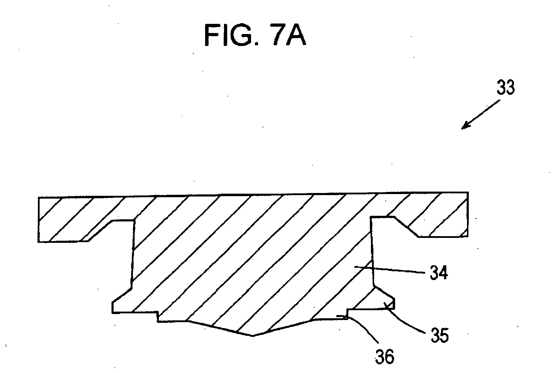

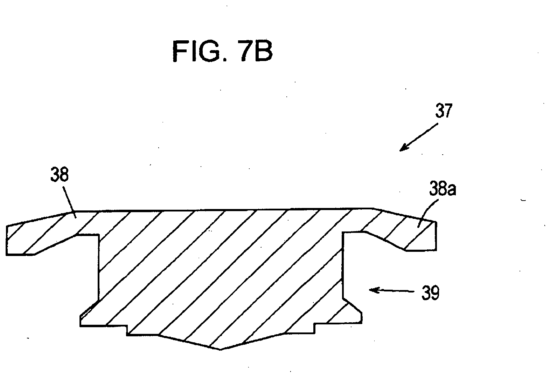

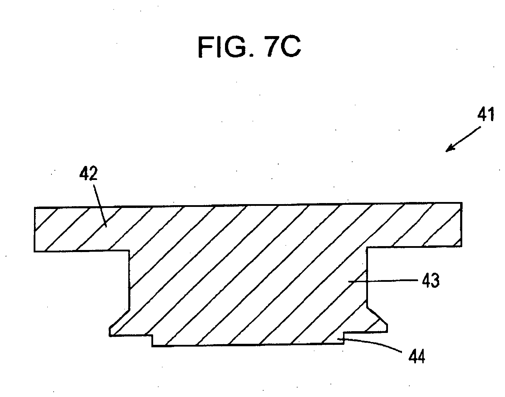

Figs. 7A, 7B, and 7C illustrate other examples of the rivet according to the present invention.

A rivet 33 in Fig. 7A differs from the rivet 1 in that the diameter of a first shank portion 34 increases toward the distal end so that a shallow undercut is formed, but is the same as the rivet 1 with regard to other points. The surface of the first shank portion 34 is slightly inclined so that the clinching between the rivet 33 and the light alloy material is reinforced.

In order to manufacture the rivet 33, a first step involves holding the perimeter of the shank of a raw material by using a split die having an inclined inner surface and then performing upset forging on the head in this state, thereby forming an intermediate rivet product (see the intermediate rivet product 11 shown in Fig. 3A) having an inclined shank. Then, in a second step, open-die forging is performed on the distal-end outer peripheral portion of the shank of the intermediate rivet product (see Fig. 3A), thereby forming a protruding portion 35 and a second shank portion 36.

A rivet 37 in Fig. 7B differs from the rivet 1 in that an upper outer peripheral portion 38a of a head 38 is inclined toward a shank 39 and that the head 38 is reduced in thickness in its entirety. Other points are the same as those of the rivet 1. The rivet 37 is reduced in weight due to the reduced thickness of the head 38. Moreover, because the upper outer peripheral portion 38a of the head 38 is inclined, a step between the rivet and the light alloy material after the clinching process is smaller.

A rivet 41 in Fig. 7C has the basic shape of the rivet according to the present invention but differs from the rivet 1 in that a head 42 does not have an annular groove surrounding a first shank portion 43 and that a protrusion is not provided at the distal end of a second shank portion 44. Other points are the same as those of the rivet 1. The groove 8 of the head 2 formed in the rivet 1 has a function of causing the light alloy material to flow therein during the rivet driving process so as to increase the clinching strength. The protrusion 7 of the second shank portion 6 provided in the rivet has a function of causing the weld current to concentrate in the region centered on the protrusion 7 during the spot-welding process so that a weld nugget is readily formed at the center of the rivet.

### EXAMPLES

Next, advantages of examples of the present invention will be described by comparing them with comparative examples that deviate from the scope of the invention.

### <Forgeability of Rivet>

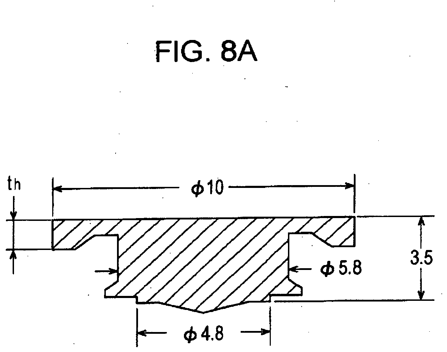

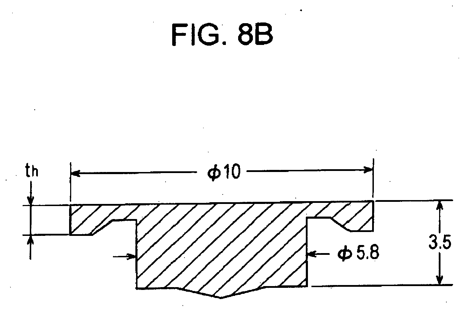

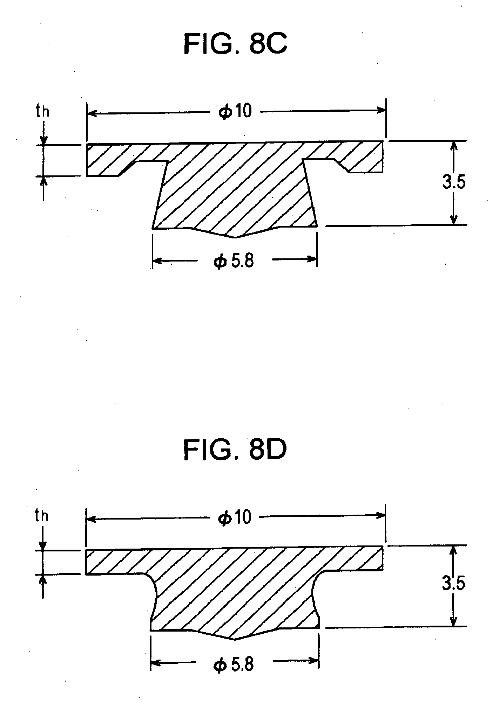

Rivets (all of which are rotating bodies), the cross-sectional profiles of which taken through the axes thereof have the shapes shown in Figs. 8A, 8B, 8C, and 8D, are formed by forging alone. With regard to each of these rivets, the diameter of the head is 10 mm, and the height from the upper end of the head to the distal end of the shank (excluding the protrusion) is 3.5 mm. The rivet in Fig. 8A is the rivet according to the present invention, in which the first shank portion has a diameter of 5.8 mm and the second shank portion has a diameter of 4.8 mm. With regard to the rivet in Fig. 8B, the diameter of the shank is 5.8 mm and substantially does not change in the axial direction. With regard to the rivet in Fig. 8C, the diameter of the shank increases toward the distal end, and the distal end of the shank has a diameter (i.e., a maximum diameter) of 5.8 mm. The cross-sectional shape of this rivet is similar to those of the rivets described in Patent Literatures 1 and 2. With regard to the rivet in Fig. 8D, the central portion of the shank curves inward such that the diameter decreases, and the lower end has a diameter of 5.8 mm.

The above-described rivets in Figs. 8A and 8B can be formed without problems by forging alone. The head can be formed by forging alone to have a thickness (th) ranging between 0.8 mm and 1.5 mm. On the other hand, the rivets in Figs. 8C and 8D each have a deep undercut portion in the shank, and the target shape cannot be obtained by forging alone.

### <Joint Strength Test>

Next, joint tests are performed by using the above-described rivets in Figs. 8A and 8B that can be formed by forging. The heads of the two prepared rivets have thicknesses (th) of 0.8 mm and 1.2 mm, respectively. As shown in Fig. 2, an insulation layer is formed by LAFRE (registered trademark) over the surface of each of the above-described rivets in Figs. 8A and 8B.

Each of the above-described rivets in Figs. 8A and 8B is driven into a 6000-series aluminum alloy material having a thickness of 1.2 mm so as to be clinched to the aluminum alloy material.

Subsequently, each rivet is placed over a cold-rolled steel plate (SPCC), having a thickness of 1.0 mm, with an overlap space of 30 mm, and the rivet and the steel plate are spot-welded together, whereby a dissimilar-material joined body constituted of an aluminum alloy material and a steel material is fabricated. The welding conditions include using DR-type electrodes composed of a chromium copper alloy (having a diameter of 16 mm and a radius of curvature of 80 mm at the distal-end surface) as the electrodes, and applying a pressure of 3 kN and a weld current of 7000 A for an electric-current application time period of 200 msec after clamping the rivet and the steel plate with the pair of electrodes.

Then, a joint test piece having a width of 30 mm and a length of 200 mm centered on the spot-welded portion is cut out from the spot-welded dissimilar-material joined body, and the tensile strength is measured by performing a tensile test until the steel plate and the aluminum alloy plate, which are clamped together, rupture. The rupture occurs at the spot-welded portion.

Furthermore, by using a test piece collected in a manner similar to that in the tensile test, torque (i.e., clinching force) is measured by clamping the aluminum alloy plate with a jig and twisting it until rotation between the plate and the rivet occurs.

Table 1 shows the thickness of the head of each of the fabricated rivets in Figs. 8A and 8B, the diameter of the weld nugget formed by spot-welding, the tensile strength (i.e., the joint strength), and the torque (i.e., the clinching force).

**[Table 1]**

| | Thickness of Head (mm) | Diameter (mm) of Weld Nugget | Tensile Strength (kN) | Torque (N/m) |
|---|---|---|---|---|
| Rivet in Fig. 8A | 1.2 | 3.5 | 3.5 | 1.8 |
| | 0.8 | 3.5 | 3.3 | 1.8 |
| Rivet in Fig. 8B | 1.2 | 2.5 | 2.7 | 1.3 |
| | 0.8 | 2.5 | 2.4 | 0.9 |

As shown in Table 1, in the case where the rivet in Fig. 8A is used, high tensile strength (i.e., high joint strength) is obtained regardless of the head having the reduced thickness, and the clinching force (i.e., the torque) hardly decreases.

In the case where the rivet in Fig. 8B is used, there is a decrease in the diameter of the weld nugget, which is considerably caused by shunting of the electric current during the spot-welding process. The tensile strength (i.e., the joint strength) also greatly decreases, and there is also a decrease in the clinching force (i.e., the torque) in a type in which the head is reduced in thickness.

The present application is based on Japanese Patent Application (No. 2015-8435) filed on January 20, 2015, the contents of which are hereby incorporated by reference.

### Reference Signs List

- 1: forged rivet for joining dissimilar materials
- 2: head
- 3: shank
- 4: first shank portion
- 5: protruding portion
- 6: second shank portion
- 7: protrusion
- 8: groove
- 9: insulation layer

## Claims

1. A forged rivet for joining dissimilar materials and composed of steel, the forged rivet including a plate-shaped head and a shank extending from the head, the forged rivet being driven into a light alloy material and perforating the light alloy material by using the shank while being simultaneously clinched to the light alloy material, the forged rivet being subsequently spot-welded to a steel material,
wherein the shank includes
a first shank portion extending from the head,
a ring-shaped protruding portion protruding along an outer periphery of a distal end of the first shank portion, and
a second shank portion having a cross-sectional area smaller than that of the first shank portion and extending further toward a distal end from the protruding portion,
wherein, of the shank and the head, a surface in contact with the light alloy material is provided with a coating film having an electrical resistance higher than that of the steel material.

2. The forged rivet for joining dissimilar materials according to Claim 1, wherein the head is provided with an annular groove surrounding the first shank portion.

3. The forged rivet for joining dissimilar materials according to Claim 1, wherein the distal end of the second shank portion is provided with a protrusion.

4. The forged rivet for joining dissimilar materials according to Claim 2, wherein the distal end of the second shank portion is provided with a protrusion.

5. A dissimilar-material joining method for joining a steel material and a light alloy material by using the forged rivet for joining dissimilar materials according to any one of Claims 1 to 4, the dissimilar-material joining method comprising: driving the forged rivet into the light alloy material and perforating the light alloy material by using the shank while simultaneously clinching the forged rivet to the light alloy material; subsequently placing the light alloy material over the steel material; clamping the head of the forged rivet and the steel material by using a pair of electrodes; applying electricity to the electrodes while pressing against the forged rivet and the steel material by using the electrodes; and spot-welding the shank of the forged rivet and the steel material together.

6. A dissimilar-material joined body obtained by clinching the forged rivet for joining dissimilar materials according to any one of Claims 1 to 4 to a light alloy material, placing the light alloy material over a steel material, and joining the shank of the forged rivet to the steel material by spot-welding, wherein the forged rivet is driven into the light alloy material and is clinched to the light alloy material between the head and the protruding portion, and wherein a gap is formed between the light alloy material and the second shank portion.
